(19) Europäisches Patentamt
European Patent Office
Office européen des brevets

(11) **EP 0 744 552 A1**

(12) **EUROPÄISCHE PATENTANMELDUNG**

(43) Veröffentlichungstag:
27.11.1996 Patentblatt 1996/48

(51) Int. Cl.⁶: **F04D 29/68**, F03B 11/04,
B63H 1/18

(21) Anmeldenummer: 96106607.3

(22) Anmeldetag: 26.04.1996

(84) Benannte Vertragsstaaten:
AT BE CH DE DK ES FR GB GR IE IT LI LU MC NL PT SE

(30) Priorität: 23.05.1995 DE 19518603

(71) Anmelder: KSB Aktiengesellschaft
D-67227 Frankenthal (DE)

(72) Erfinder:
• Stoffel, Bernd, Prof. Dr.
64354 Reinheim (DE)
• Bross, Stefan, Dr.
67229 Grosskarlbach (DE)
• Brodersen, Sönke, Dr.
69198 Schriesheim (DE)

(54) **Einrichtung zur Vermeidung von Kavitations-Erosion**

(57) Den Gegenstand der Erfindung bildet eine Einrichtung zur Vermeidung von Kavitations-Erosion an strömungsführenden Bauteilen. Sie besteht aus Leitelementen (4), die an durch Kavitations-Erosion gefährdeten Wandflächen (11) angeordnet sind und in Strömungsrichtung (13) sowie senkrecht oder mit einem leichten Neigungswinkel zur umströmten Wandfläche verlaufen. Zwischen den Leitelementen (4) bildet sich eine Sekundärströmung auf, mit der implodierende Kavitationsblasen von einer umströmten Wandfläche weg und in den freien Strömungsraum gespült werden.

Fig. 4

# Beschreibung

## Technisches Gebiet

Die vorliegende Erfindung bezieht sich auf das Gebiet der Einrichtungen zur Verhinderung von Kavitationsschäden an strömungsführenden Bauteilen und/oder Strömungsmaschinen. Das technische Gebiet, welches solche Einrichtungen beschreibt, ist durch das KSB-Kreiselpumpenlexikon, 3. Auflage, Ausgabe 1989, Seiten 138 - 140 beschrieben.

## Stand der Technik

In Maschinen oder Geräten, die von flüssigen Medien durchströmt werden, wie beispielsweise Pumpen, Turbinen oder auch Armaturen, kommt es zur Bildung von Kavitationsblasen, wenn der statische Druck innerhalb des Fördermediums den zugehörigen Dampfdruck der Flüssigkeit unterschreitet. Steigt dann wieder, in Strömungsrichtung gesehen, der statische Druck über den Dampfdruck an, so bewirkt dies einen schlagartigen Zerfall der dampfförmigen Kavitationsblasen. Dies stellt gewissermaßen eine Kondensation oder Stoßkondensation dar, die mit sehr hoher Geschwindigkeit in einer Art Implosion vor sich geht. Findet nun diese Implosion der Kavitationsblasen an einer Wand eines strömungsführenden Bauteiles statt, so bewirkt dies einen Materialabtrag an dem strömungsführenden Bauteil. Dieser Vorgang wird Kaviations-Erosion genannt und bestimmt maßgeblich die zu erwartende Lebensdauer eines der Kavitation ausgesetzten Bauteiles.

Es sind verschiedene Maßnahmen bekannt und gebräuchlich, um die Entstehung von Kavitationsblasen zu vermeiden. Hierzu zählen betriebstechnische Veränderungen, mit deren Hilfe der Druck innerhalb des Systems so erhöht wird, daß der statische Druck den Dampfdruck nicht unterschreiten kann. Andere Maßnahmen sehen bestimmte Gestaltungen der umströmten Flächen vor, um lokale Unterschreitungen des Dampfdruckes und damit die Entstehung von Kavitationsblasen zu vermeiden, wie es beispielsweise aus der DE-C-27 08 368 bekannt ist.

Der Erfindung liegt das Problem zugrunde, eine Einrichtung zur Vermeidung von Kavitations-Erosion zu entwickeln und damit den Einsatzbereich von Bauteilen oder Maschinen auch im Bereich kavitierender Betriebszustände hinaus zu vergrößern.

## Darstellung der Erfindung

Das Problem wird mit einer Einrichtung dadurch gelöst, daß eine gefährdete strömungsführende Wandfläche im Bereich einer Kavitations-Erosionszone mit abstehenden, in Strömungsrichtung verlaufenden Leitelementen versehen ist wobei aufgrund der Höhe und Länge der Leitelemente zwischen diesen eine Kanalströmung ausgebildet ist. Das Wesen der Erfindung besteht also darin, eine durch Kavitations-Erosion gefährdete strömungsführende Wandfläche mit mehreren Leitelementen auszustatten, aufgrund derer zwischen den Leitelementen eine Kanalströmung entsteht. Diese Leitelemente haben nicht die Aufgabe, die Hauptströmung auf einem vorgegebenen Weg zu halten bzw. zu lenken. Vielmehr wird durch besondere geometrische Wahl der Leitelemente eine gezielte Wirkung auf implodierende Kavitationsblasen ausgeübt. Da zwischen der strömungsführenden Wandfläche und einem darauf errichteten Leitelement eine Ecke gebildet ist, entsteht eine Sekundärströmung innerhalb des Kanales. Diese Sekundärströmung überlagert sich der eigentlichen Kanalströmung und verläuft senkrecht zur Hauptströmungsrichtung. Gewissermaßen transportiert die Sekundärströmung Teile des Strömungsmaterials entlang der Kontur der umströmten Wandfläche und senkrecht zur Hauptströmungsrichtung. Im Bereich der Kanalströmung existiert also bildlich gesprochen eine Art Unterströmung oder Unterspülung. Eine damit verbundene geänderte Druckverteilung sorgt nun dafür, daß innerhalb der Kanalströmung implodierende Kavitationsblasen oberhalb der Sekundarströmung und in einem geringen Abstand oberhalb der umströmten Wandfläche implodieren. Damit kann an dem Wandflächenmaterial keine Materialschädigung mehr hervorgerufen werden. Gewissermaßen wird also der Ort der Implosion der Kavitationsblasen durch die Unterströmung von der Wand des strömungsführenden Bauteiles hinweg und in die freie Strömung hinein verlagert. Das Verhalten der Grenzschichten in den Ecken zwischen umströmter Wandfläche und Leitelement ist ursächlich für die Auslösung einer Sekundärströmung.

Bevorzugte Ausführungsformen der Erfindung sind in den Ansprüchen 2 bis 4 beschrieben und haben die Abmessungen der Leitelemente zum Gegenstand. Mit deren Hilfe wird die Sekundärströmung zwischen den Leitelementen an der umströmten Oberfläche gehalten, wodurch die Kavitation von einer Wandfläche weg in den freien Strömungsweg der Hauptströmung verlagert wird. Die Implosion der Kavitationsblasen findet damit im freien Strömungsquerschnitt statt und kann somit keine Erosion an den Wandflächen mehr hervorrufen. Die Leitelemente weisen dabei eine Höhe H auf, die gleich oder größer 20 x δ ist. δ entspricht hier der jeweiligen Grenzschichtdicke der vorhandenen Strömung.

Zur Erzeugung einer Kanalströmung mit der erfindungsgemäßen Wirkung auf die Kavitations-Erosion besteht zwischen der Höhe eines Leitelementes und dem Abstand zwischen einander benachbarten Leitelementen ein Verhältnis, welches im Bereich

$$1{,}0 \leq \frac{H}{B} \leq 2{,}0$$

liegt. Die Länge L eines Leitelementes ist dabei mindestens 10 x H, wobei H der mittleren Höhe eines Leitelementes entspricht. Zur Vermeidung von Strömungsverlusten durch die Leitelemente ist deren Wanddicke möglichst gering zu wählen und deren Vorderkante zu runden, um somit unerwünschte Widerstände und Strömungsablösungen zu vermeiden.

Nicht zu verwechseln sind diese Leitelemente mit den sogenannten Grenzschichtzäunen, wie sie im Flugzeugbau bekannt sind. Dort werden auf Tragflächen in Flugrichtung verlaufende Grenzschichtzäune angeordnet, um infolge der dort vorherrschenden Pfeilung der Tragflächen ein Abgleiten der Profilgrenzschichten in Richtung der Flügelspitzen zu verhindern. Im Gegensatz zu den erfindungsgemäßen Leitelementen sollen also die Grenzschichtzäune das Gegenteil des in der Erfindung Beschriebenen bewirken, nämlich Querströmungskomponenten verhindern.

Eine weitere Ausführungsform der erfindungsgemäßen Einrichtung sieht vor, die Leitelemente in Richtung der Stromlinien der Hauptströmung verlaufen zu lassen. Damit wird der geringstmögliche Widerstand bezüglich einer angreifenden Strömung erreicht und gleichzeitig eine optimale Wirkung in bezug auf die Verlagerung der Implosionen der Kavitationsblasen von der Wandfläche weg und in das Strömungsmedium hinein.

Weitere vorteilhafte Ausgestaltungen der Erfindung sehen vor, daß bei Strömungsmaschinen die Ausrichtung der Leitelemente in Richtung der Stromlinien erfolgt, wie sie im Bereich des Optimalpunktes vorherrschen, daß die Leitelemente an den strömungsführenden Wandflächen selbsteinstellend angeordnet sind oder, daß die Leitelemente dünnwandig und mit abgerundeten Anströmkanten versehen sind. Aufgrund von selbsteinstellenden Anordnungen der Leitelemente können sie sich bei Änderungen der Zuströmung entsprechend den Verlauf der Stromfäden einstellen. Dies erlaubt in einfachster Weise ein selbsttätige Anpassung an veränderte Strömungssituationen.

## Kurze Erläuterung der Figuren

Die Erfindung wird nachstehend mit Hilfe von Ausführungsbeispielen im Zusammenhang mit den Figuren näher erläutert. Es zeigen

Fig. 1 eine Draufsicht auf eine einzelne Schaufel, deren kavitationsgefährdeter Bereich mit Leitelementen versehen ist, die

Fig. 2 eine Ansicht auf einen Eintrittsquerschnitt eines Laufrades mit an den Schaufeleintrittskanten angebrachten Leitelementen, die

Fig. 3 die Darstellung einer Sekundärströmung im Bereich zwischen zwei Leitelementen, die auf einer strömungsführenden Wandfläche angebracht sind, die

Fig. 4 eine Draufsicht auf ein Blasenbild einer kavitierenden Strömung zwischen Leitelementen, die

Fig. 5 eine Darstellung des Blasenbildes von Fig. 4 gemäß Schnitt V-V und die

Fig. 6 - 10 Darstellungen von verschiedenen Formen der Leitelemente.

## Wege zur Ausführung der Erfindung

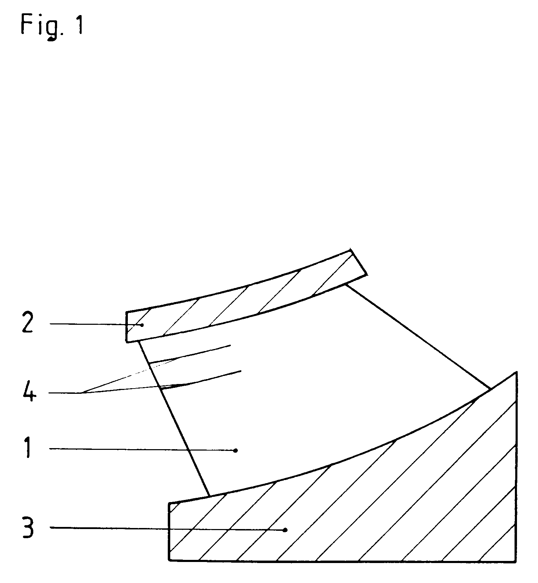

In der Fig. 1 ist eine strömungsführende Fläche 1 dargestellt, die Bestandteil einer Pumpe, einer Armatur oder eines anderen durch Kavitation gefährdeten Gerätes sein kann. Die Fläche 1 ist zwischen zwei begrenzenden Wandflächen 2, 3 angeordnet. Ein Strömungsmedium fließt der Fläche 1 von der linken Bildseite zu. Sollte es sich bei der strömungsführenden Fläche 1 um die Schaufel eines Kreiselpumpenlaufrades handeln, dann würden die Wandflächen 2, 3 den Wandflächen der Deckscheiben entsprechen. Wäre dagegen die Fläche 1 Bestandteil einer Armatur, dann könnten die Wandflächen 2, 3 einen Strömungskanal begrenzenden Gehäusewandflächen entsprechen. In einem durch Kavitationsblasen gefährdeten Bereich sind beispielhaft zwei Leitelemente 4 angeordnet. Diese Leitelemente 4 stehen von der strömungsführenden Fläche 1 ab und können zu dieser Fläche 1 senkrecht oder in geneigter Ausführung verlaufen. Wesentlich ist hierbei, daß zwischen strömungsführender Fläche 1 und Leitelement 4 eine Ecke gebildet wird. Die Ecke dient zur Auslösung einer Sekundärströmung innerhalb derjenigen Strömung, die zwischen den Leitelementen 4 oder einem Leitelement 4 und einer benachbarten Wandfläche 2 hindurchströmt. In der in Fig. 1 gezeigten Darstellung ist der Abstand zwischen einer Gehäusewandfläche 2 und dem Leitelement 4 sowie zwischen zwei Leitelementen annähernd gleich groß. Somit werden zwischen diesen drei Teilen zwei Kanäle gebildet, in denen aufgrund der Länge der Leitelemente eine Kanalströmung entsteht. Die strömungsführende Fläche 1 kann eine Fläche innerhalb eines strömungsführenden Bauteiles sein, welches aufgrund der internen Strömungssituation durch Kavitations-Erosion gefährdet ist. Hierfür in Betracht kommen auch die verschiedenen Armaturen welche zur Steuerung und Regelung von Fluiden Verwendung finden.

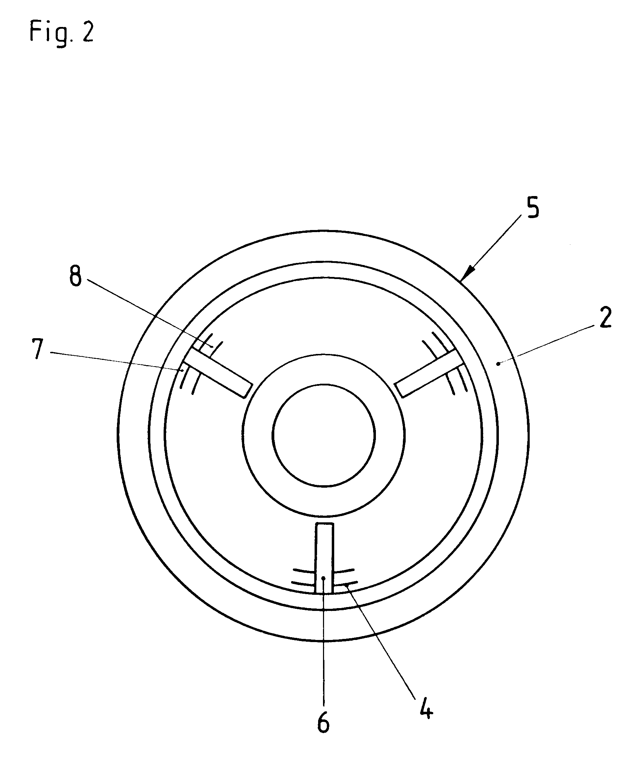

In der Fig. 2 ist als eine von mehreren möglichen Anwendungen als Ausführungsbeispiel die Ansicht auf den Eintrittsdurchmesser eines Laufrades 5 gezeigt, wie es beispielsweise bei Kreiselpumpen Verwendung findet. Beiderseits der hier sichtbaren Anströmkanten 6 von Laufradschaufeln sind Leitelemente 4 angeordnet. Hinter den Eintrittskanten und quasi senkrecht auf der Zeichenebene befinden sich von den Anströmkanten 6 ausgehende strömungsführende Flächen 1. Auf diesen Flächen 1 bilden die Leitelemente 4 in Verbindung mit einer angrenzenden Wandfläche 2, die hier einer Laufraddeckscheibe entspricht, pro Schaufelseite jeweils zwei Kanäle 7, 8 aus. Die Kanäle sind an den Flächen 1 an denjenigen Stellen angeordnet, an denen aufgrund der zu erwartenden Strömungsbedingungen mit dem Auftreten von Kavitationserosion zu rechnen ist.

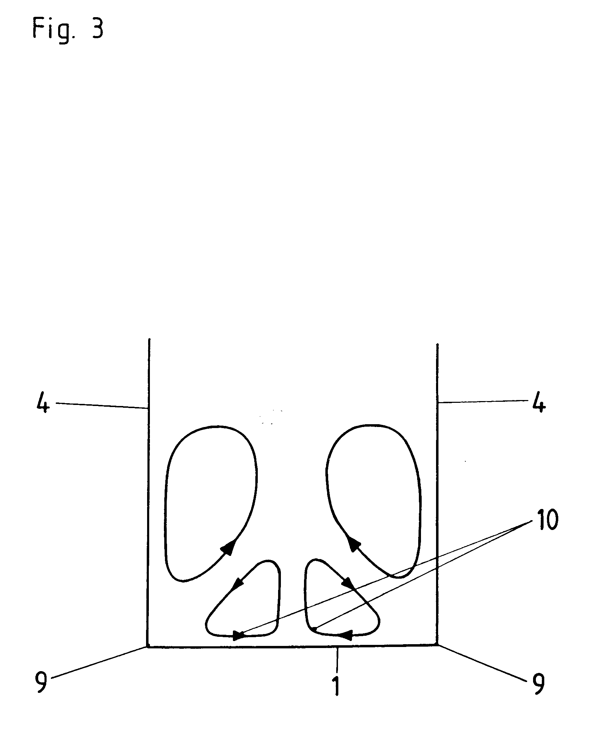

In der Fig. 3 ist ein vollständig gefüllter und durchströmter Kanalquerschnitt gezeigt. Von den Ecken 9 des Kanalquerschnittes werden Sekundärströmungen 10 indiziert, die im Bereich der strömungsführenden Fläche 1 quer zur senkrecht auf der Zeichenebene stehenden Durchströmrichtung verlaufen.

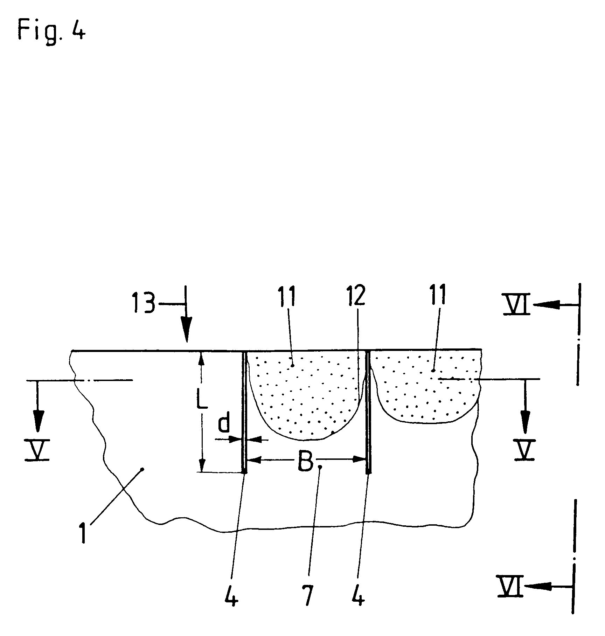

Fig. 4 zeigt als Draufsicht einen Ausschnitt aus einer umströmten Fläche 1, die in dem Beispiel mit zwei Leitelementen 4 versehen ist. In Abhängigkeit von der Größe des durch Kavitationserosion gefährdeten Bereiches 11 können auch entsprechend weitere Leitelemente Verwendung finden. Die Leitelemente verfügen über eine möglichst geringe Dicke d. Deren Höhen H, Längen L und Abstände B zueinander weisen folgende Bezeichnungen auf:

$$H \geqq 20 \times \delta$$

wobei $\delta$ der Grenzschichtdicke des jeweiligen Strömungsmediums entspricht,

$$L \geqq 10 \times H$$

$$1,0 \leqq \frac{H}{B} \leqq 2,0 \,.$$

Eine Umrißlinie 12 schließt denjenigen Strömungsbereich 11 ein, in dem aufgrund des statischen Druckes innerhalb des strömungsführenden Gerätes ein Druck herrscht, der unterhalb des statischen Druckes der Flüssigkeit liegt. Dadurch entstehen an dieser Stelle Kavitationsblasen. In den außerhalb der Umrißlinie 11 liegenden Bereichen ist der Druck wieder höher, so daß dort Kavitationsblasen nicht mehr entstehen, bzw. in sich zusammenfallen. Die Hauptströmungsrichtung wird durch den Pfeil 13 symbolisiert.

Ohne die Leitelemente würden in dem gefährdeten Bereich der strömungsführenden Flächen beim Zerfall der Kavitationsblasen eine schädigende Kavitations-Erosion auftreten. Ein dadurch bedingter Materialabtrag kann in kürzester Zeit zum Ausfall des gesamten Aggregates führen.

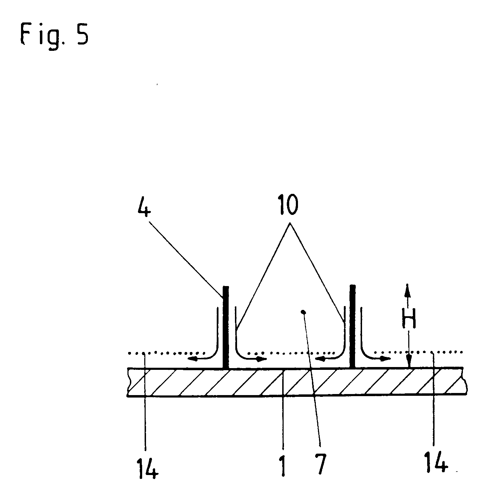

Die Fig. 5, welche einem Schnitt gemäß Linie V-V von Fig. 4 entspricht, zeigt den Verlauf der Sekundärströmung 10. Diese entsteht aufgrund der Leitelemente 4 und dem dazwischen ausgebildeten Kanalquerschnitt in einem durchströmten Kanal 7. Die Sekundärströmung 10 verläuft senkrecht oder quer zu der auf der Zeichenebene stehenden Hauptströmungsrichtung 13. Die Sekundärströmung 10 transportiert Strömungsteilchen zwischen die umströmte Wandfläche 1 und die Kavitationsblasen 14. Damit wird erreicht, daß die Implosionen der Kavitationsblasen 14 innerhalb des Mediums stattfinden und nicht mehr direkt auf der Wandfläche der strömungsführenden Fläche 1.

Ein durch die Implosion der Kavitationsblasen entstehender Materialabtrag wird damit in wirkungsvollster und gleichzeitig einfachster Weise verhindert. Ein entsprechend ausgestattetes strömungsführendes Gerät kann somit in einfachster Weise auch in einem kavitationsgefährdeten Bereich betrieben werden, ohne daß Materialschädigungen durch eine vorhandene Kavitation befürchtet werden müssen. Das Einsatzgebiet eines somit ausgestatteten Gerätes kann wesentlich erweitert werden.

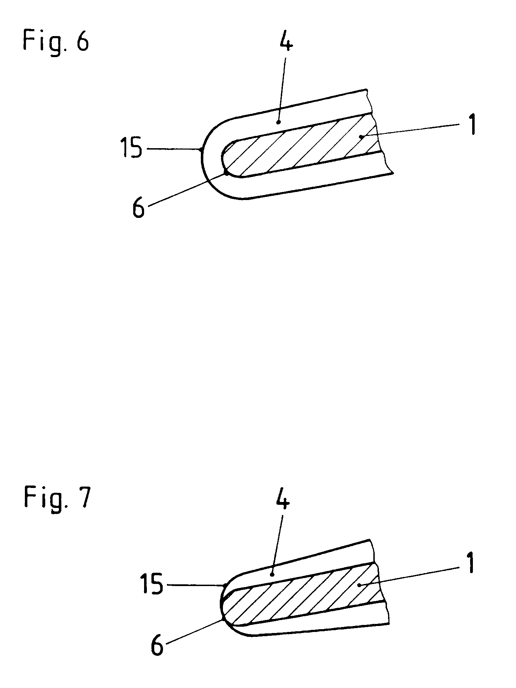

Die Fig. 6 - 7 entsprechen einem Schnitt gemäß Linie VI-VI von Fig. 4. Sie zeigen, daß die Leitelemente 4 über eine strömungsgünstig gerundete Anströmkante 15 verfügen, welche, wie in Fig. 6 dargestellt, vor der Anströmkante 6 der strömungsführenden Fläche 1 liegen kann. In der entsprechenden Darstellung der Fig. 7 geht die Anströmkante 15 von der Anströmkante 6 der strömungsführenden Fläche 1 aus. Die strömungsführende Fläche 1 ist hier am Beispiel eines Strömungsprofils dargestellt, welches beidseitig mit Leitelementen 4 ausgestattet ist.

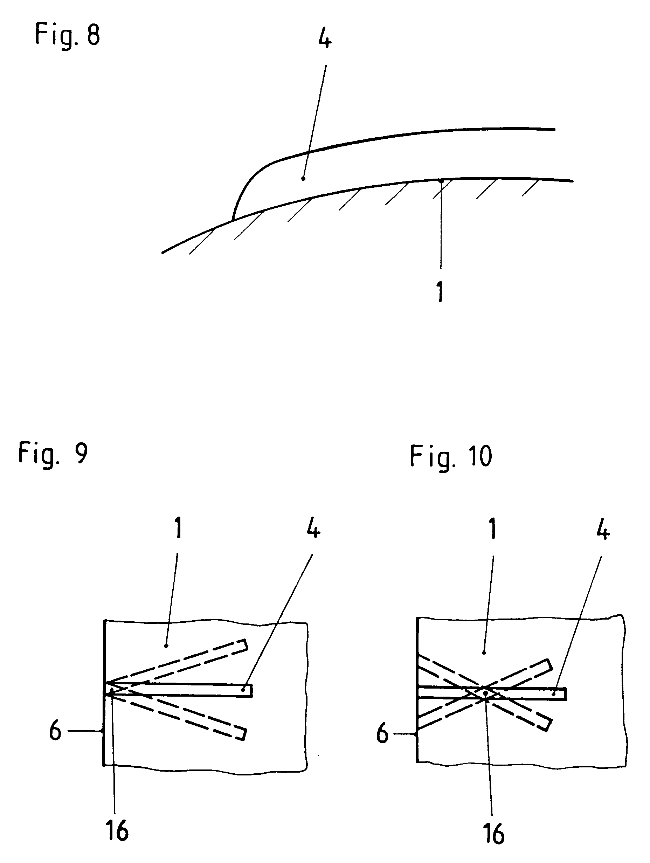

In der Fig. 8 ist beispielhaft dargestellt, daß ein Leitelement 4 auch stromabwärts von einer Vorderkante angeordnet sein kann. Je nach Einsatzort ist dann das Leitelement im kavitationsgefährdeten Bereich einer strömungsführenden Fläche angeordnet.

In der Fig. 9 ist als Draufsicht auf eine strömungsführende Fläche 1 eine Darstellung gezeigt, wonach das Leitelement 4 auf der strömungsführenden Wandfläche 1 beweglich angeordnet ist. Zu diesem Zweck ist das Leitelement 4 im Bereich des Anströmpunktes beweglich angeordnet. Bei einer Änderung der Zuströmung kann sich somit das Leitelement entsprechend anpassen.

In Fig. 10 ist eine Befestigungsart gezeigt, derzufolge das Leitelement um einen mittleren Befestigungspunkt 16 schwenkbar ist. Mittels dieser Lösungen wird gewährleistet, daß bei veränderten Zuströmrichtungen des Mediums das Leitelement diesen Änderungen folgen kann und keine zusätzlichen Strömungsverluste im Bereich der umströmten Fläche produziert. Die hier ober- und unterhalb der strömungsführenden Fläche 1 angeordneten Leitelemente 4 können selbstverständlich auch nur einseitig angebracht werden. Das Material, aus dem die Leitelemente 4 bestehen, wird entsprechend den Gegebenheiten ausgewählt. Es muß gegenüber den einwirkenden Kräften und dem Medium beständig sein. Die gestrichelten Darstellungen der Leitelemente 4 zeigen die jeweiligen Endlagen des Einstellbereiches.

**Patentansprüche**

1. Einrichtung zur Verminderung von Kavitationsschäden an durchströmten Bauteilen und/oder an Strömungsmaschinen, **dadurch gekennzeichnet**, daß im Bereich einer Kavitations-Erosionszone (11) eine gefährdete strömungsführende Wandfläche (1) mit abstehenden, in Strömungsrichtung verlaufenden Leitelementen (4) versehen ist, wobei aufgrund der Höhe (H) und Länge (L) der Leitelemente (4) zwischen diesen eine Kanalströmung ausgebildet ist.

2. Einrichtung nach Anspruch 1, dadurch gekennzeichnet, daß die Leitelemente (4) an einem strömungsführenden Bauteil einen von Kavitationserosion gefährdeten Bereich (11) zwischen sich einschließen.

3. Einrichtung nach Anspruch 1 oder 2, dadurch gekennzeichnet, daß die Leitelemente eine Höhe H ≧ 20 x δ aufweisen, wobei der Wert (δ) einer mittleren Grenzschichtdicke des Strömungsmediums entspricht.

4. Leiteinrichtung nach Anspruch 1, 2 oder 3, dadurch gekennzeichnet, daß zwischen Leitelementhöhe (H) und einem Abstand (B) von einander benachbarten Leitelementen (4) ein Verhältnis nach der Formel

$$1,0 \leqq \frac{H}{B} \leqq 2,0$$

besteht.

5. Leiteinrichtung nach einem der Ansprüche 1 bis 4, dadurch gekennzeichnet, daß ein Leitelement (4) eine Länge L ≧ 10 x H aufweist, wobei der Wert (H) der mittleren Höhe eines Leitelementes (4) entspricht.

6. Einrichtung nach einem oder mehreren der Ansprüche 1 bis 5, dadurch gekennzeichnet, daß die Leitelemente (4) in Richtung der Stromlinien der Hauptströmung flüssigen Strömungsmediums verlaufen.

7. Einrichtung nach Anspruch 6, dadurch gekennzeichnet, daß bei Strömungsmaschinen die Ausrichtung der Leitelemente (4) in Richtung der Stromlinien erfolgt, wie sie im Bereich des Optimalpunktes vorherrschen.

8. Einrichtung nach Anspruch 6 oder 7, dadurch gekennzeichnet, daß die Leitelemente (4) an den strömungsführenden Wandflächen (1) selbsteinstellend angeordnet sind.

9. Einrichtung nach einem der Ansprüche 1 bis 8, dadurch gekennzeichnet, daß die Leitelemente (4) dünnwandig und mit abgerundeten Anströmkanten versehen sind.

Fig. 1

Fig. 2

Fig. 3

Fig. 4

Fig. 5

Fig. 6

Fig. 7

Fig. 8

4

1

Fig. 9

1

4

6

16

Fig. 10

1

4

6

16

Europäisches Patentamt

**EUROPÄISCHER RECHERCHENBERICHT**

Nummer der Anmeldung

EP 96 10 6607

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Section PQ, Week 9507<br>Derwent Publications Ltd., London, GB;<br>Class Q55, AN 95-049900<br>XP002008339<br>& SU-A-1 378 492 (LENGD METAL WKS TURBINE PROD ASSOC) , 15.April 1994<br>* Zusammenfassung *<br>--- | 1,2,6 | F04D29/68<br>F03B11/04<br>B63H1/18 |
| X | PATENT ABSTRACTS OF JAPAN<br>vol. 011, no. 078 (M-570), 10.März 1987<br>& JP-A-61 234300 (HITACHI LTD), 18.Oktober 1986,<br>* Zusammenfassung *<br>--- | 1,2,6 | |
| A | PATENT ABSTRACTS OF JAPAN<br>vol. 007, no. 287 (M-264), 21.Dezember 1983<br>& JP-A-58 160560 (HITACHI SEISAKUSHO KK),<br>24.September 1983,<br>* Zusammenfassung *<br>--- | 1,2,6 | |
| A | FR-A-2 589 423 (WELDON THOMAS)<br>* Seite 1, Zeile 1 - Zeile 5 *<br>* Seite 3, Zeile 7 - Zeile 25 *<br>* Seite 6, Zeile 8 - Seite 7, Zeile 1 *<br>* Seite 9, Zeile 10 - Zeile 21; Abbildungen *<br>--- | 1,8,9 | **RECHERCHIERTE SACHGEBIETE (Int.Cl.6)**<br><br>F04D<br>F03B<br>B63H |
| A | EP-A-0 629 779 (KLEIN SCHANZLIN & BECKER AG)<br>* Seite 3, Zeile 54 - Zeile 57; Anspruch 2; Abbildungen 5-7 *<br>--- | 1,3,4 | |
| A | US-A-1 907 908 (VARNEY)<br>* Seite 1, Zeile 8 - Zeile 14 *<br>* Seite 2, Zeile 57 - Zeile 107; Abbildungen *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 12.Juli 1996 | Zidi, K |

EPO FORM 1503 03.82 (P04C03)